# EUROPÄISCHE PATENTSCHRIFT

(11) **EP 0 376 024 B1**
(45) Veröffentlichungstag und Bekanntmachung des Hinweises auf die Patenterteilung: **02.08.1995**
(21) Anmeldenummer: 89122727.4
(22) Anmeldetag: 09.12.1989
(51) Int. Cl.: G01D 18/00

(54) **Verfahren und Vorrichtung zur Korrektur von Bauteiltoleranzen bei der Verarbeitung von Signalen**
Process and device for correcting a signal-processing circuit with respect to deviations from its elements due to manufacturing tolerances
Procédé et dispositif de correction des tolérances de manufacture des éléments d'un circuit de traitement de signaux

(30) Priorität: 30.12.1988 DE 3844333
(43) Veröffentlichungstag der Anmeldung: 04.07.1990
(73) Patentinhaber: ROBERT BOSCH GMBH, 70442 Stuttgart (DE)
(72) Erfinder: Knab, Rochus, D-7014 Kornwestheim (DE); Entenmann, Robert, Dipl.-Ing. (FH), D-7141 Benningen (DE); Rohde, Siegfried, Dr. Dipl.-Ing., D-7141 Oberriexingen (DE); Bonitz, Joerg, Dipl.-Ing., D-7130 Mühlacker (DE); Miller, Bernhard, D-7000 Stuttgart 40 (DE); Viess, Walter, Dipl.-Ing., D-7141 Schwieberdingen (DE); Stengel, Bernhard, Dipl.-Phys., D-7146 Tamm (DE); Unland, Stefan, Dipl.-Ing., D-7141 Schwieberdingen (DE); Winter, Herbert, Dipl.-Ing., D-7144 Asperg (DE); Philipp, Matthias, Dipl.-Ing., D-7000 Stuttgart 40 (DE); Foerster, Siegmar, Dipl.-Ing., D-7110 Oehringen (DE); Zimmermann, Jürgen, Dr. Dipl.-Phys., D-7141 Schwieberdingen (DE); Beyer, Hans-Ernst, Dipl.-Ing., D-7145 Markgroeningen (DE); Kuenzel, Walter, Dr. Dipl.-Ing., D-7140 Ludwigsburg (DE); Kugler, Wolfgang, D-7143 Vaihingen/Enz 3 (DE); Mahlberg, Alfred, Dr.-Ing., D-7149 Freiberg (DE); Landsmann, Gerhard, Dipl.-Ing., D-7147 Eberdingen (DE); Dietsche, Karl-Heinz, Dipl.-Ing., D-7257 Hirschlanden (DE); Mencher, Bernhard, Dipl.-Ing., D-7141 Schwieberdingen (DE)

(56) Entgegenhaltungen:
- EP-A- 0 175 915
- EP-A- 0 423 622
- DE-A- 3 150 013
- PATENT ABSTRACTS OF JAPAN vol. 8, no. 257 (P-316)(1694) 24. November 1984 & JP-A-59 128 410
- PATENT ABSTRACTS OF JAPAN vol. 8, no. 167 (E-258) 2. August 1984 & JP-A-59 064 907

## Beschreibung

### Stand der Technik

Die Erfindung geht aus von einem Verfahren nach der Gattung des Anspruchs 1 bzw. von einer Vorrichtung nach der Gattung der Ansprüche 2 oder 3.

Es ist bekannt, daß die Ausgangssignale von Sensoren mittels einer elektronischen Schaltung ausgewertet und in Nutzsignale umgewandelt werden. Dabei werden in diesen Schaltungen Verstärker, Filter, Gleichrichter und Integratoren verwendet, die mit Bauteiltoleranzen behaftet sind. Da einige dieser Bauelemente, wie beispielsweise Verstärker, Integratoren usw. auch Operationsverstärker enthalten, entstehen zusätzliche Offset-Spannungen, Offset-Ströme und Leckwiderstände. Dies führt dazu, daß solche Schaltungen, beispielsweise eine Klopferkennungsschaltung wie sie aus der DE-OS 31 37 016 bekannt sind, mit zusätzlichen Fehlern behaftet sind.

In der genannten Schrift DE-OS 31 37 016 wird eine Klopferkennungsschaltung beschrieben, bei der ein dem Klopfvorgang zugeordnetes Nutzsignal mit einem Referenzsignal verglichen wird und aus diesem Vergleich auf Klopfen geschlossen wird. Dabei werden sowohl das Klopfsignal als auch das Referenzsignal aus dem Ausgangssignal des Klopfsensors gewonnen, das über einen regelbaren Verstärker, einen Bandpaß und einen Gleichrichter einem Integrator zugeführt wird, wobei das Integrationsergebnis nach der Analog/Digitalwandlung in einem Mikroprozessor weiter ausgewertet wird.

Dabei liefert der Integrator infolge der angesprochenen Offset-Ströme bzw. Offset-Spannungen auch dann einen Integrationswert, wenn kein Signal vom Klopfsensor abgegeben wird.

Um die Fehler, die von diesen Offset-Spannungen, Offset-Strömen bzw. Leckwiderständen herrühren, in vertretbarem Rahmen zu halten, sind aufwendige Anpassungen und Abgleiche der einzelnen Bauelemente erforderlich, die aufwendig und kostspielig sind.

Aus der DE-OS 31 50 013 ist eine Einrichtung zur automatisierten Justierung bzw. Eichung von Meßgeräten und Wandlern physikalischer Eingangsgrößen bekannt, die bei solchen Systemen eingesetzt wird, bei denen physikalische Eingangsgrößen in elektrische umgewandelt werden sollen. Dazu werden Eichwerte bei bestimmten Werten der physikalischen Größen ermittelt und diese Eichwerte werden abgespeichert.

Im regulären Betrieb werden diese Eichwerte verwendet, um die Meßergebnisse zu korrigieren und damit die Meßgenauigkeit zu erhöhen. In einer Ausgestaltung des in der DE-OS 31 50 013 beschriebenen Verfahren bzw. der beschriebenen Vorrichtung wird die Beeinflussung des Nullpunktes und des Verstärkungsfaktors eines Verstärkers mit Hilfe eines Addierwerkes im Zuge der Meßstrecke vorgenommen, wodurch zur Nullpunktkorrektur ein Korrektursignal entweder hinzuaddiert oder subtrahiert wird. Es wird dabei jedoch nicht der Verstärkungsfaktor auf Null einegestellt und beobachtet, welches Signal sich am Ausgang der weiteren Schaltungsanordnung ergibt, sondern es wird lediglich eine Nullpunkteinstellung durchgeführt.

Aus der EP-A3 0 175 915 ist ein Verfahren zur Klopfregelung von Brennkraftmaschinen bekannt, bei dem eine Einrichtung verwendet wird, die weitgehend der für die Lösung der vorliegenden Erfindung verwendeten Einrichtung entspricht. Es wird jedoch keine Offsetkompensation durchgeführt, sondern es wird lediglich beschrieben, wie eine besonders vorteilhafte Klopferkennung möglich ist, indem während zweier kurbelwellensynchroner Meßfenster zum einen das Klopfsignal und zum anderen ein Hintergrundsignal gebildet wird. Aus den gleichgerichteten und integrierten Werten dieser beiden Signale wird durch Vergleich in einem Mikrocomputer klopfen dann erkannt, wenn das Klopfsignal das Hintergrundsignal in vorgebbarer Weise überschreitet.

### Vorteile der Erfindung

Das erfindungsgemäße Verfahren mit den kennzeichnenden Merkmalen der Ansprüche 1 oder 2 hat den Vorteil, daß die Genauigkeit der Auswerteschaltung wesentlich erhöht wird, ohne daß aufwendige Offset-Abgleiche durchgeführt werden müssen und ohne daß enge Bauteiltoleranzen erforderlich sind. Dabei wird das von den Bauteiltoleranzen bzw. Offset-Spannungen, Offset-Strömen und Leckwiderständen verursachte zusätzliche Signal das zu unerwünschten Störungen führen kann, dadurch erkannt, daß der Signalauswerteschaltung zu bestimmten Zeiten ein definiertes Signal zugeführt wird und das dann entstehende Ausgangssignal zu Korrekturzwecken verwendet wird.

### Zeichnung

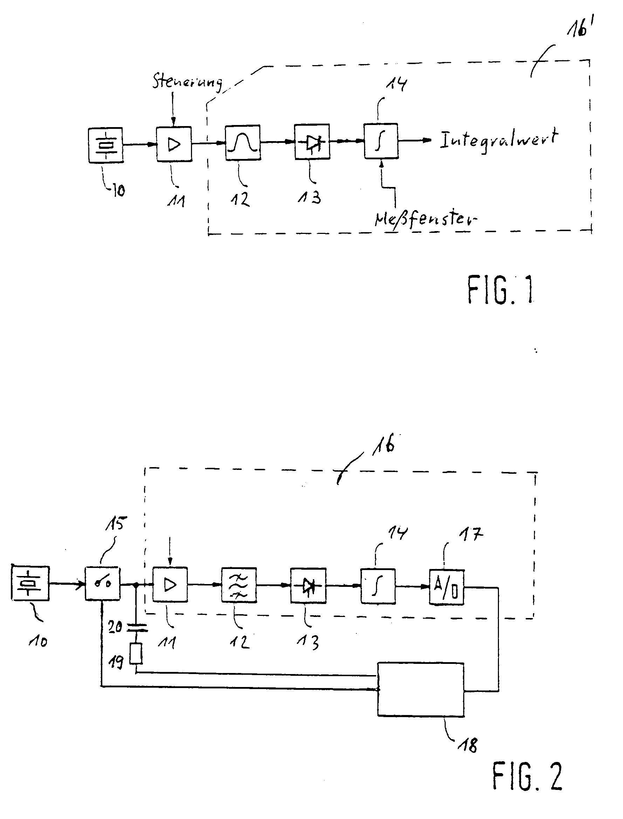

Die erfindungsgemäße Vorrichtung ist in der Zeichnung dargestellt und wird in der nachfolgenden Beschreibung näher erläutert. Es zeigen Figur 1 die schaltungsgemäße Ausgestaltung eines ersten Ausführungsbeispiels und Figur 2 die schaltungsgemäße Ausgestaltung eines zweiten Ausführungsbeispiels. Gleiche Bauteile sind in beiden Figuren mit denselben Bezugszeichen versehen.

### Beschreibung der Ausführungsbeispiele

Bei dem in Figur 1 dargestellten Ausführungsbeispiel ist ein Klopfsensor 10 über einen steuerbaren Verstärker 11 und ein Filter 12, das vorzugsweise als Bandpaß ausgebildet ist, an eine Gleichrichterschaltung 13 angeschlossen. Der Ausgang der Gleichrichterschaltung 13 ist mit einem Integrator 14 verbunden, der während eines Meßfensters das ihm zugeführte Signal aufintegriert und an seinem Ausgang einen Integralwert liefert.

Dieser Integralwert steht zur weiteren Auswertung zur Verfügung, aufgrund des nichtidealen Verhaltens der Bauelemente in der Auswerteschaltung (Offset-Spannungen, Offset-Ströme, Leckwiderstände usw.) ist er jedoch mit einem Fehler behaftet.

Um diesen Fehler erkennen zu können, wird nun der Verstärker 11 zunächst so eingestellt, daß seine Verstärkung V = 0 wird. Damit läßt sich am Ausgang des Integrators ein Integralwert entnehmen, der lediglich von den Fehlern bzw. den Bauteiltoleranzen der einzelnen Bauelemente der Auswerteschaltung abhängt. Dieser Integralwert wird abgespeichert und dazu verwendet, die im normalen Betrieb, d. h. also bei Verstärkungen des Regelverstärkers ungleich 0 ermittelten aktuellen Integralwerte zu korrigieren.

Erfindungsgemäß kann die Verstärkung des steuerbaren Verstärkers 11 zu bestimmten, wählbaren Zeiten wieder zu 0 gemacht werden und der dann ermittelte aktuelle Integralwert zur weiteren Korrektur verwendet werden.

Die weitere Klopferkennung basiert nun, wie bereits bekannt, auf einem Vergleich des Integralwerts am Ende eines Meßfensters mit einem Referenzwert, der aus vorangegangenen Integralwerten gebildet wird. Dabei sind nunmehr jedoch alle Integralwerte, die zur Klopferkennung verwendet werden, mit dem bei Verstärkung 0 ermittelten, von Bauteiltoleranzen herrührenden Fehler korrigiert.

Bei dem in Figur 2 dargestellten Ausführungsbeispiel ist ein Klopfsensor 10 über einen Schalter 15 mit einer Auswerteschaltung 16 verbunden, wobei die Auswerteschaltung 16 eine Reihenschaltung eines regelbaren Verstärkers 11, eines Filters 12, einer Gleichrichterschaltung 13, eines Integrators 14 und eines Analog/Digital-Wandlers 17 umfaßt. Diese Auswerteschaltung 16 ist mit einem Mikrocomputer 18 verbunden, der außerdem noch mit dem Schalter 15 verbunden und weiterhin über eine Reihenschaltung eines Widerstandes 19 und eines Kondensators 20 an den Eingang der Auswerteschaltung 16 angeschlossen ist.

Die Bauelemente der Auswerteschaltung 16, also das Filter 12, die Gleichrichterschaltung 13 und der Integrator 14 können auch im Mikrocomputer 18 enthalten sein, die A/D-Wandlung des Sensorausgangssignals muß dementsprechend früher, in jedem Fall vor der digitalen Weiterverarbeitung erfolgen.

Die Wirkungsweise der in Figur 2 dargestellten Vorrichtung ist wie folgt: Die vom Sensor 10 abgegebenen Signale werden über den geschlossenen Schalter 15 dem Regelverstärker 11 zugeführt und gegebenenfalls verstärkt, die Ausgangssignale des Regelverstärkers 11 werden über das Filter 12, vorzugsweise einen Bandpaß, der Gleichrichterschaltung 13 zugeführt und die Ausgangssignale der Gleichrichterschaltung 13 im Integrator 14 während eines Meßfensters aufintegriert. Die so erhaltenen Integralwerte, die aufgrund des nichtidealen Verhaltens der Bauelemente der Auswerteschaltung mit Fehlern behaftet sind, werden im Analog/Digital-Wandler 17 digitalisiert und dem Mikrocomputer 18 zur weiteren Verarbeitung zugeführt.

Um diese Fehler in Grenzen zu halten, bzw. um sie zu korrigieren, werden Korrekturwerte benötigt.

Zur Ermittlung dieser Korrekturwerte wird im Mikrocomputer ein Signal generiert, das über den Widerstand 19 und den Kondensator 20 bei geöffnetem Schalter 15 der Auswerteschaltung 16 zugeführt wird. Dieses Signal würde bei fehlerloser Signalverarbeitung in der Auswerteschaltung 16 zu einem bekannten (theoretischen) Integralwert im Integrator 14 führen. Infolge der Bauteiltoleranzen wird jedoch im Integrator 14 ein anderer Integralwert registriert. Der Vergleich des tatsächlichen Integralwerts mit dem theoretischen Wert liefert einen Differenzwert, der ein Maß für den Fehler der Auswerteschaltung 16, also der Signalverarbeitungsstrecke darstellt und als Korrekturwert verwendet werden kann. Die so ermittelten Korrekturwerte werden im Mikrorechner 18 von den bei der Signalverarbeitung entstehenden Integrationswerten subtrahiert, dadurch wird sichergestellt, daß die vom Sensor 10 gelieferten Ausgangssignale fehlerfrei ausgewertet werden.

Zur Kompensation von additiven Fehlern reicht es aus, wenn die Ermittlung der Korrekturwerte mittels eines einzigen, vom Mikrorechner 18 generierten und über den Schalter 15 der Auswerteschaltung 16 zu geführten Signales erfolgt. Dagegen müssen zur Kompensation von multiplikativen Fehlern mindestens zwei Messungen mit verschiedenen Signalhöhen bei allen Verstärkungsstufen des steuerbaren Verstärkers (4 Stufen) durchgeführt werden. Die Signale, die für diese Messungen benötigt werden, werden wiederum im Mikrocomputer generiert.

Die Korrektur von Bauteiltoleranzen bei der Verarbeitung von Signalen ist nicht auf die im Ausführungsbeispiel dargestellte Verarbeitung von Ausgangssignalen eines Klopfsensors beschränkt, sie kann vielmehr bei allen Auswerteverfahren, die Bauteile mit Offset-Spannungen bzw. Offset-Strömen umfassen, verwendet werden.

Es ist weiterhin auch möglich, statt eines einzigen Sensors mehrere Sensoren, beispielsweise mehrere Klopfsensoren vorzusehen, deren Ausgangssignale wechselweise über einen Schalter, vorzugsweise den Schalter 15 der Auswerteschaltung zugeführt werden.

## Patentansprüche

1. Verfahren zur Verarbeitung von Signalen, insbesondere von Klopfsensorausgangssignalen, mit einer Schaltungsanordnung, der die Signale eines Sensors zugeführt werden und die einen Verstärker, Mittel zur Filterung, zur Gleichrichtung und zur Integration der Signale aufweist, wobei an den Eingang der Schaltungsanordnung zu wählbaren Zeiten ein definiertes Signal anlegbart ist, dadurch gekennzeichnet, daß zur Korrektur von Bauteiltoleranzen und/oder Offsetfehlern der Schaltungsanordnung (16) die Verstärkung des Verstärkers (11), der ein regelbarer Verstärker ist, zu den wählbaren Zeiten auf näherungsweise Null eingestellt wird und der dabei im Integrationsmittel (14) erzeugte Integralwert abgespeichert wird und zur Korrektur der Integralwerte, die bei der Auswertung der zu verarbeitenden Signale auftreten, verwendet wird.

2. Verfahren zur Verarbeitung von Signalen, insbesondere von Klopfsensorausgangssignalen mit einer Schaltungsanordnung, der die Signale eines Sensors zugeführt werden und die einen Verstärker, Mittel zur Filterung, zur Gleichrichtung und zur Integration der Signale aufweist und einen Mikrocomputer, der das Ausgangssignal der Schaltungsanordnung erfaßt, wobei dem Eingang der Schaltungsanordnung zu wählbaren Zeiten ein definiertes Signal zugeführt wird, dadurch gekennzeichnet, daß zur Korrektur von Bauteiltoleranzen und/oder Offsetfehlern der Schaltungsanordnung (16) ein im Mikrocomputer (18) selbst generiertes definiertes Signal zugeführt wird, wobei dann die Verbindung zwischen dem Sensor und der Auswerteschaltung (16) unterbrochen wird und die Differenz zwischen dem dann von der Recheneinrichtung ermittelten Integralwert und dem zugehörigen theoretisch ermittelten Integralwert bestimmt wird und abhängig von dieser Differenz von Integralwerten eine Korrektur der Nutzsignale erfolgt.

3. Verfahren nach Anspruch 2, dadurch gekennzeichnet, daß im Mikrocomputer (18) wenigstens zwei definierte Signale mit verschiedenen Signalhöhen erzeugt werden und der Schaltungsanordnung (16) zugeführt werden und die erhaltenen Integralwerte bei der Korrektur berücksichtigt werden.

4. Verfahren nach Anspruch 1, 2 oder 3, dadurch gekennzeichnet, daß die Ausgangssignale mehrerer Sensoren nacheinander ausgewertet werden.

## Claims

1. Method for processing signals, in particular knocking sensor output signals, having a circuit arrangement to which the signals of a sensor are fed, which circuit arrangement has an amplifier, means for filtering, rectifying and integrating the signals, it being possible for a defined signal to be applied to the input of the circuit arrangement at selectable times, characterized in that, in order to correct component tolerances and/or offset faults of the circuit arrangement (16), the amplification of the amplifier (11), which is a controllable amplifier, is set at the selectable times to approximately zero and the integral value which is produced in this case in the integration means (14) is stored and is used to correct the integral values which occur during the evaluation of the signals to be processed.

2. Method for processing signals, in particular knocking sensor output signals with a circuit arrangement to which the signals of a sensor are fed, and which circuit arrangement has an amplifier, means for filtering, rectifying and integrating the signals, and a microcomputer which detects the output signal of the circuit arrangement, a defined signal being fed to the input of the circuit arrangement at selectable times, characterized in that, in order to correct component tolerances and/or offset faults of the circuit arrangement (16), a defined signal which is generated in the microcomputer (18) itself is supplied, the connection between the sensor and the evaluation circuit (16) then being interrupted and the difference between the integral value then determined by the computing device and the associated, theoretically determined integral value is determined and the useful signals are corrected as a function of this difference of integral values.

3. Method according to Claim 2, characterized in that at least two defined signals with different signal levels are produced in the microcomputer and are fed to the circuit arrangement (16) and the integral values obtained are taken into account during the correction.

4. Method according to Claim 1, 2 or 3, characterized in that the output signals of a plurality of sensors are successively evaluated.

## Revendications

1. Procédé de traitement de signaux notamment de signaux de sortie d'un capteur de cliquetis, comprenant un circuit qui reçoit les signaux d'un capteur et comprend un amplificateur, des moyens pour filtrer, pour redresser et pour intégrer les signaux, et l'entrée du circuit peut recevoir à des instants choisis un signal déterminé, procédé caractérisé en ce que pour la correction des tolérances entachant les composants et/ou les défauts de décalage du circuit 16, l'amplification de l'amplificateur (11) qui est un amplificateur réglable est fixée à un coefficient d'amplification voisin de zéro à des instants choisis et la valeur d'intégration créée dans le moyen d'intégration (14) est enregistrée et est utilisée pour corriger les valeurs d'intégration qui s'obtiennent lors de l'exploitation des signaux à traiter.

2. Procédé de traitement de signaux notamment de signaux fournis par un capteur de cliquetis à l'aide d'un circuit qui reçoit les signaux d'un capteur et comprend un amplificateur, des moyens pour filtrer, redresser et intégrer les signaux et un micro-ordinateur qui reçoit le signal de sortie du circuit, l'entrée du circuit recevant un signal déterminé à des instants choisis, caractérisé en ce que pour corriger les tolérances entachant les composants et/ou les erreurs de décalage du circuit (16), on applique un signal déterminé généré directement dans le micro-ordinateur (18) et on coupe alors la liaison entre le capteur et le circuit d'exploitation (16) et on détermine la différence entre la valeur d'intégration fournie par l'installation de calcul et la valeur d'intégration théorique correspondante obtenue et en fonction de cette différence des valeurs d'intégration, on effectue une correction des signaux utiles.

3. Procédé selon la revendication 2, caractérisé en ce que le micro-ordinateur (18) crée au moins deux signaux déterminés ayant des amplitudes différentes et ces signaux sont appliqués au circuit (16) qui tient compte des valeurs d'intégration contenues pour la correction.

4. Procédé selon les revendications 1, 2 ou 3, caractérisé en ce qu'on exploite successivement les signaux de sortie de plusieurs capteurs, les uns après les autres.
